# EUROPEAN PATENT SPECIFICATION

(11) **EP 4 090 859 B1**
(45) Date of publication and mention of the grant of the patent: **24.06.2026**
(21) Application number: 21713458.4
(22) Date of filing: 13.01.2021
(51) Int. Cl.: F16F 15/02, F16F 15/03, F16F 15/06, B23Q 11/00, B23Q 17/09

(54) **A TUNEABLE CLAMPING DEVICE FOR SUPPRESSING VIBRATIONS OF A CLAMPED WORKPIECE**
ABSTIMMBARE KLEMMVORRICHTUNG ZUR UNTERDRÜCKUNG VON SCHWINGUNGEN EINES EINGESPANNTEN WERKSTÜCKES
DISPOSITIF DE SERRAGE RÉGLABLE PERMETTANT DE SUPPRIMER LES VIBRATIONS D'UNE PIÈCE SERRÉE

(30) Priority: 17.01.2020 HU 2000020
(43) Date of publication of application: 23.11.2022
(73) Proprietor: Budapesti Müszaki és Gazdaságtudományi Egyetem, 1111 Budapest (HU)
(72) Inventor: MUNOA, Jokin, 20750 Zumaia (ES); DOMBÓVÁRI, DR., Zoltán, 1074 Budapest (HU); MIKLÓS, DR., Ákos, 9481 Pinnye (HU); STÉPÁN, DR., Gábor, 1124 Budapest (HU); TÓTH, András, 2030 Érd (HU)
(74) Representative: Dwornik, Marek
(86) International application number: PCT/HU2021/050003
(87) International publication number: WO 2021/144597

(56) References cited:
- EP-A1- 2 708 316
- DE-A1- 102006 049 867
- US-A- 6 123 312

## Description

### Technical field

The present invention relates to the suppression of vibrations produced in machine tools during machining processes, such as turning, milling, boring or grinding. More particularly a Tuneable Stiffness and Damping Clamping Device for Machine Tools or tuneable clamping device is proposed which establishes direct optimal serial dynamic coupling or indirect coupling via the machining process between its own mode with the modes of the workpiece. In this way the tuned dynamics of the tuneable clamping device modifies the dynamics of the workpiece in order to dampen vibrations arising during machining without any contact with the surface to be machined. The proposed tuneable clamping device can be embodied as a separate standalone device or an embedded part of the machine tool.

### Background art

Regenerative chatter vibration is one of the most crucial problems in machining, including turning, milling, grinding or boring. Chatter vibrations limit the material removal rate and the efficiency of the machining process; they can lead to inacceptable surface finish, or even to the damage of the machine tool and the workpiece.

The regenerative chatter vibration is a self-excited vibration, typical for cutting processes. Regenerative means that the cutting tool is passing through previously finished surfaces, where the vibration of the tool in the previous cut is copied into the surface of the workpiece. As a result, the actual chip thickness depends on the tool position not only in the present but also in the previous cut, resulting in a varying chip thickness during time. This is true also for constant cutting parameters in case of any disturbance. Since the cutting force depends on the chip thickness, this variation leads to an excitation loop, in specific cases with increasing amplitude, and the process can become unstable. Whether chatter vibrations arise or not depends on cutting parameters, machine tool and workpiece dynamics, lubrication, cooling, etc., thus the conditions of stable or unstable process change during the cutting process.

The most conventional methods for avoiding unwanted vibrations in general is to tune natural frequencies of the machine structure far enough from the harmful frequencies, or to isolate the vibrations with shock absorbers. Patent no. US 6123312 discloses a method and apparatus for varying stiffness and/or damping characteristics of a vibration isolation system based on the machine's control signal which indicates the motion status of at least one movable component of a machine supported by the vibration isolation system. These methods are not applicable for machine tools, where the frequencies of predictable forced vibration and unpredictable regenerative chatter vibration can be of very broad band. Furthermore, the natural frequencies of the workpiece and the machine itself vary during operation due to position changes of the machine axes or due to mass loss on the workpiece.

Another method is to use inertial dampers or vibration absorbers consisting one or more moving masses which are attached to the machine through deformable elements. In a passive case the vibration of the attachment point causes the moving mass to vibrate, and with the proper tuning of the inertial damper this vibration counteracts with the vibration of the attachment point. The inertial damper also dissipates energy during vibration, thus it is a effective solution to avoid vibrations if the frequency of the excitation is known. However, it is known that passive dampers must be placed in parallel with respect of the force flow through the machine tool, on a position of the part to be damped which has the largest amplitude motion. Moreover, its stiffness and damping must be designed to have its standalone natural frequency close to the natural frequency of the attenuated part, in order to achieve optimal damping, which has even more significant role in regenerative machining processes.

Inertial dampers can be passive, semi-active and active dampers. Passive dampers have only passive elements with fixed parameters and work only for the predesigned frequencies. As the cutting position of the machine changes, or the mass of the workpiece is reduced, passive dampers lose from their performance.

In order to adapt to the varying dynamics of the machine it is possible to change the properties of the deformable element such that the damped frequency changes according to the current natural frequencies of the machine. This tuning can be carried out by the operator before machining or during operation manually or automatically.

Furthermore, it is possible to use active elements as a connection between the machine and the inertial mass such that the force acting on the machine can be theoretically arbitrary in order to optimize energy dissipation. Such an active damper is disclosed in EP 2708316 wherein the damper consists of an outer casing, inside which a suspended inertial mass is housed, an elastic element which is rotated by a motor associated with an encoder being arranged inside this inertial mass, while pairs of magnets associated with said inertial mass are arranged. The magnets of each pair are separated by means of an electrical conducting plate fixed to the outer casing, such that a magnetic field giving rise to damping due to the relative movement with respect to the plate is generated between the magnets. The main feature of this damper is the possibility of automatically identifying its own stiffness and damping. The vibration measured by the two accelerometers is processed during the machining process, and the stiffness and damping joining the inertial mass and the structure can be calculated from the ratio between these two measurements. Active dampers are therefore more effective than passive and semi-active dampers, however, they are more expensive, complex and less robust.

Passive inertial dampers have the advantage of being simple and robust, although those need to be combined with adaptive parameter selections in order to have tuned stiffness and damping. However, tuneable inertial dampers need to be fixed on the most flexible part in parallel of the vibrating structure. This cannot be realized in case of flexible workpieces, since the most flexible part is the machined workpiece itself.

Apart from inertial dampers, clamping devices with active control exist in order to counteract static deformations of the workpiece and machining tool. With such devices manufacutring precision can be improved (if the process remains stable), but self-excited chatter vibrations still can occur.

On the other hand, active clamping devices can act against self-excited vibrations, but usually these systems are extremely complex, expensive and also they need continuous power supply for operation. Thus, an effective device or method is still needed in order to ensure stable machining of flexible workpieces with high material removal rate. L. Sallese, G. Innocenti, N. Grossi, A. Scippa, R. Flores, M. Basso, G. Campatelli (2017) Mitigation of chatter instabilities in milling using an active fixture with a novel control strategy, The International Journal of Advanced Manufacturing Technology, 2017

Tactile dampeners like lunettes achieve attenuation in flexible parts by increasing their apparent stiffness and damping. There are passive and active tactile dampeners that can achieve even closed loop dampening of a flexible part of a workpiece. It is an important problem to orient the tactile dampeners to achieve the desired attenuation and to avoid interaction and/or collision with the operational segments of the machining operation. In many cases lunettes cannot be placed near the cutting zone due to the mentioned problems.

Passive dampers are placed in parallel on the part of the structure to be dampened. According to the theory presented in Den Hartog JP (1934) Mechanical Vibrations, McGraw-Hill Book Company, New York/Lond*on,* it is possible to calculate the optimal parameters of the passive dampers. In general it is always favoured to increase the placed mass. According to the ratio between the placed mass and the apparent modal mass of the structure stiffness and damping of the standalone passive damper can be determined in order to increase the maximum dynamic stiffness of the combined mechanical system.

Passive dampers are placed in parallel on the part of the structure to be dampened. Theoretized tuning for passive dampers are presented for simple regenerative orthogonal cutting model in Sims ND (2007) Vibration Absorbers for Chatter Suppression: A New Analytical Tuning Methodology. Journal of Sound & Vibration 301: 592-607*,* which based on the mass ratio of the placed mass and the apparent modal mass of the structure. According to the ratio between the placed mass and the apparent modal mass of the structure tuning and damping of the standalone passive damper can be determined in order to increase the minimum (decrease the maximum) of the real part of the compliance frequency response function (FRF) in case of positive (negative) directional factors. The FRF is defined by the displacement of the structure versus the excitation force acting on the same structure.

### Summary of the invention

### Short summary

According to the present invention, a tuneable clamping device is proposed for suppressing vibrations of workpieces with flexible parts originated from the machining process. The tuneable clamping device comprises a stationary part which is fixed to the machine tool table or being part of the machine tool table itself, and a moving table. The moving table is connected to the stationary part across relative motion. The stationary part and the moving table comprise a tuneable connection with adjustable stiffness element and adjustable damping element. Accelerometers are connected to the stationary part and the moving table.

The tuneable clamping device does not need contact to the surface to be machined, unlike conventional passive dampers, which should be placed onto machine parts with the largest amplitude motion, which is most probably the machined surface itself, in case of flexible workpieces. In contrary, the tuneable clamping device takes part serially in the force-flow closed by the machine tool, the workpiece and the clamping, unlike passive dampers which are connected parallel to the force-flow.

The tuneable clamping device can automatically select its stiffness and damping to establish said optimal serial dynamic coupling, or said coupling via the machining process between its own modes and the workpiece dynamics. This is achieved by an adaptive tuning mechanism of the clamping device itself by varying the stiffness and damping according to the acquired vibratory state. The adaptive tuning is iteratively performed until achieving the said optimal serial dynamic coupling case or a case when coupling appears through the process said coupling via the machining process. The main objective is to improve productivity by the increased stability of the cutting process, thus greater pass depths, and therefore faster material removal are allowed. The second advantage is greater precision due to reduced vibrations.

In case of optimal serial dynamic coupling the attached flexible part (workpiece) has a dominant vibration mode that matches to the dominant vibration mode of the flexible support (table). This creates a possibility to transfer energy between the two coupled modes resulting in more advantageous combined dynamics, when the vibration amplitude of the attached flexible part (workpiece) is reduced under the force excitation acting on the same flexible part (workpiece). This is in contrary to the well-known passive damper concept when the aim is to reduce the vibration of the support. The serial dynamic coupling is optimal if a special relative value is set for the natural frequencies of the two modes and for the contributed damping of the flexible support (table).

Coupling via the machining process happens when the regenerative effect establishes coupling through the modulations of the regenerative chatter vibration frequency, ensuring such energy transfer between modes that stabilizes the manufacturing process by facilitating additional stable domains. This coupling via the machining process works e.g. for milling process that can be subjected to intense excitation of force modulations.

### Solution for the clamping device

The proposed invention makes it possible to tune the stiffness and damping of the tuneable clamping device by a flexible element with adjustable stiffness in one direction and by damping elements based on eddy currents. The invention is defined in Claim 1.

The tuneable clamping device according to the invention comprise a said stationary part which is fixed to the machine tool or is part of the machine tool, and a moving part, said table on which the actual workpiece is clamped. The tuneable clamping device achieves tuning between the stationary part and the table in order to damp a dominant mode of the workpiece by playing the role of a device that establishes said serial dynamic coupling or said coupling through the process to dissipate indirectly kinetic energy related to the workpiece.

A flexible element with anisotropic stiffness is arranged between the said stationary part and the table of the tuneable clamping device said table, such that the flexible element can be rotated by an electric motor or other actuator in any desired angular position. The relative motion of the table to the stationary part can be constrained to be one directional, this way the stiffness of the tuneable clamping device can be controlled directly by the angular position of the anisotropic stiffness flexible element. Other solutions are possible to reach adjustable stiffness, e.g. a cantilever beam like ball screw, where the position of the coupling point between stationary part and moving table defines the stiffness of the connection. In this case the unidirectional constraint may be not necessary. Tuning of the connection (19) may be possible in multiple directions of the relative motion of the table (3). The mounting of the adjustable stiffness element is preferably such that the element is exchangable in order to achieve the required available stiffness range of the tuneable connection.

Pairs of magnets and electrically conducting plates are fixed to the stationary part and the table moving relative to each other, generating damping forces due to eddy currents and without contact. Controlling the distance of the electrically conducting plates and the magnets, or controlling the overlapping area of the electrically conducting plates and the magnet, or replacing the magnets by electromagnets allow the control of the intensity of the damping.

An accelerometer is placed on the moving table, that is capable to capture the dominant vibratory behaviour of the clamped workpiece. Another accelerometer is placed on the stationary part in order to capture the vibration transmitted from the machine tool.

### Calculation of the Stiffness and Damping

The device allows controlling its stiffness and damping to the calculated optimal values ahead and during the machining process, assuring optimal tuning at all times as the natural frequencies of the system and other conditions vary in the working field, in order to damp dominant modes of the workpiece by playing the role of a connection that establishes said optimal serial dynamic coupling or said coupling through the process to dissipate indirectly kinetic energy related to the workpiece.

There are different operational modes to adjust the required damping and stiffness parameters of the tuneable clamping device. Iterative or direct solution for the said optimal serial dynamic coupling or said coupling via the machining process may be established, or it is possible to use e.g. lookup tables derived from previous measurements and/or simulations. The present invention enables the tuning of the tuneable connection between the said stationary part and the moving table in a semi-active manner, thus it requires energy only for adjusting the stiffness and damping elements, but the dissipated energy flows through the passive elements of the connection.

The said optimal serial dynamic coupling is effective for any cutting operations (broaching, grinding, turning, milling, planing, etc.), while the said coupling via the machining process can be used for cases when the machining operation has significant harmonics (milling operation, asymmetric drilling, variation spindle speed ideal drilling, etc.). Every cutting process has specific spectra including two specific sets of frequency peaks said peaks. On the one hand, stationary peaks can be predicted before the operation only by taking into account the specific frequencies of the rotary motions. On the other hand, self-excited peaks are appearing when the process is beforehand unpredictably close or over losing its stability. The dominant self-excited peak is called chatter frequency.
- In the case of optimal serial dynamic coupling the relative acceleration signal between the table and the stationary part is used to detect the natural frequency of the attached workpiece before operation, by applying an external excitation e.g. by a simple hammer.
- Using the acceleration signals acquired on the said table and the said stationary part the main chatter frequency of the vibration can be recorded by rejecting completely the stationary vibration frequencies directly related to the rotary motions in the machining operation. During the test the tuneable clamping device tends to achieve this said chatter frequency by varying its own stiffness adaptively. Since the said chatter frequency is close to the main natural frequency of the attached workpiece a near optimal serial dynamic coupling can be achieved. Optimal damping is also achieved by controlling the variable damping elements. The adaptive control finds near optimum parameters for stiffness and damping during the performed machining process iteratively.
- In the second operational mode, the acceleration sensor placed on the said table of the tuneable clamping device records the machining spectrum during operation. It determines the said main periodicity of the signal related to the rotary motions of the cutting process. By taking into account the stationary harmonics it determines the said chatter frequency and its modulations. The stiffness of the moving table is tuned to achieve coupling via the machining process by having the dominant mode of the said tuneable clamping device to the main modulation of the said chatter frequency. In this working mode the damping is welcomed to be increased drastically after setting the stiffness optimally. The tuning is a direct tuning by knowing the said main periodicity and the said chatter frequency.

### Advantages

The main innovative feature of this tuneable clamping device is that it can attenuate vibration of workpieces with flexible parts clamped on it, without actually being in connection with any passive damper device or tactile dampener like lunette. This lets the machined surface completely accessible for the machining operation.

The tuneable clamping device can follow continuously with its tuning the effect of varying dynamics of the workpiece with flexible parts clamped on during the machining operation.

The device can be considered still as a low cost semi-active solution compared to any active system, since the tuneable clamping device only changes its stiffness and damping parameters iteratively, after having the parameters set the tuneable clamping device operates as a passive device, which only uses power to establish a constant magnetic flux if the eddy current based linear damping is based on an electromagnet.

### Description of the Drawings

### Brief description of the drawings

Figure 1 shows the sketch of the tuneable clamping device during machining in a machine tool.
Figure 2 shows the sketch of the variable stiffness H-shaped spring with walls of different thickness.
Figure 3 shows the sketch of the variable stiffness cantilever beam spring.
Figure 4 shows three different solutions for the variable damping element.
Figure 5 shows one possible embodiment of the tuneable clamping device.
Figure 6 shows different vertical, horizontal, built-in and mountable arrangements of the tuneable clamping device in a machine tool.
Figure 7 shows a possible solution for the tuning capabilities of the controller of the tuneable clamping device.

### Description of Embodiments

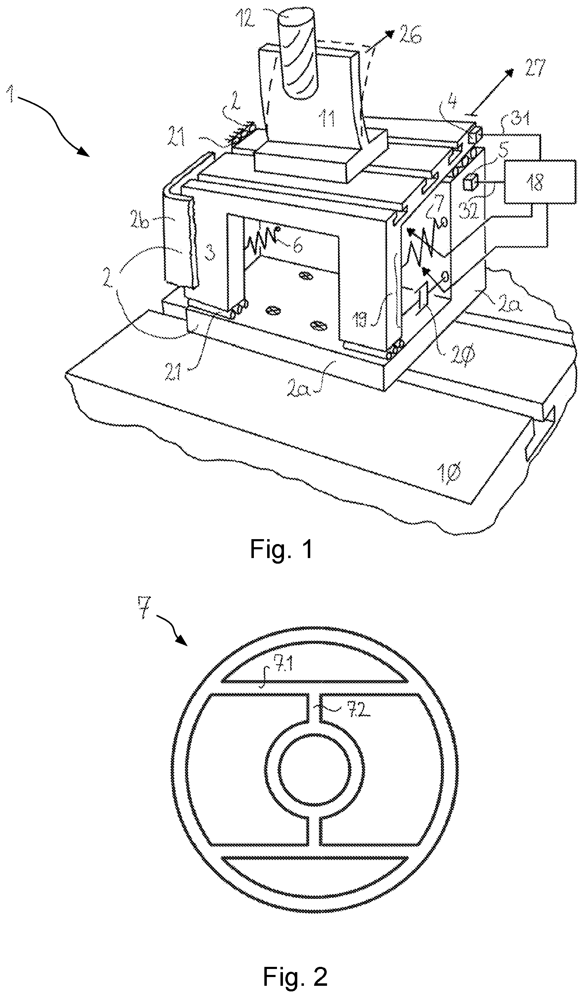

A possible embodiment for a tuneable clamping device 1 is proposed in Figure 1. The device 1 that holds a workpiece 11 comprises a stationary part 2 containing a stationary base 2a and an outer casing 2b, a moving table 3 and a tuneable connection 19 between the stationary and the moving parts. The main stiffness of the moving table 3 is given by a constant stiffness elastic element 6 and the unidirectional free movement of the moving table 3 along a relative direction of motion 27 is provided by a guide element 21. Accelerometer 4 is attached to the table 3 while another accelerometer 5 is attached to the stationary base 2a. The stationary base 2a can act as an interface between a machine tool 10 and the tuneable clamping device 1, or it can be the part of the machine tool 10. This way a tool 12 of the machine tool 10, the workpiece 11 flexible in direction 26, the moving table 3, the tuneable connection 19, the stationary part 2 and the machine tool 10 form a closed, serial force flow, resulting in a serial dynamical system. The tuneable connection 19 comprises an adjustable stiffness element 7 e.g. a spring and a contactless, preferably eddy current based adjustable damping element 20 comprising magnets 9 and electrically conducting plates 15. Thus, the stiffness of the connection between the stationary base 2a and the moving table 3 is the combined result of the constant stiffness elastic element 6 with fixed stiffness and the adjustable stiffness element 7. An accelerometer 4 is attached to the moving table 3 and another accelerometer 5 is attached to the stationary part 2 which are able to pick up vibrations of the system in order to enable the calculation of the required stiffness and damping parameters with a controller unit 18. Controller unit 18 can adjust the adjustable stiffness element 7 and the adjustable damping element 20 by actuators.

A possible embodiment is proposed for the adjustable stiffness element 7 in Figure 2, in which the anisotropic elastic element is an H-shaped spring. The moving table 3 and the stationary part 2 are connected each other via this adjustable stiffness flexible element 7 in parallel with the constant stiffness elastic elements 6. The adjustable stiffness flexible element 7 has walls 7.1, 7.2 with different thicknesses in two perpendicular directions as shown in Figure 2, designed such that the stiffness of it is anisotropic. The motion of the moving table 3 is constrained to be unidirectional (along the relative direction of motion 27) by the guiding element 21, thus changing the orientation of the adjustable stiffness element 7 results a change in the stiffness of the connection in the relative direction of the motion 27. An electric motor or other actuator device is able to change the angular position of the adjustable stiffness element 7 directly or through a transmission.

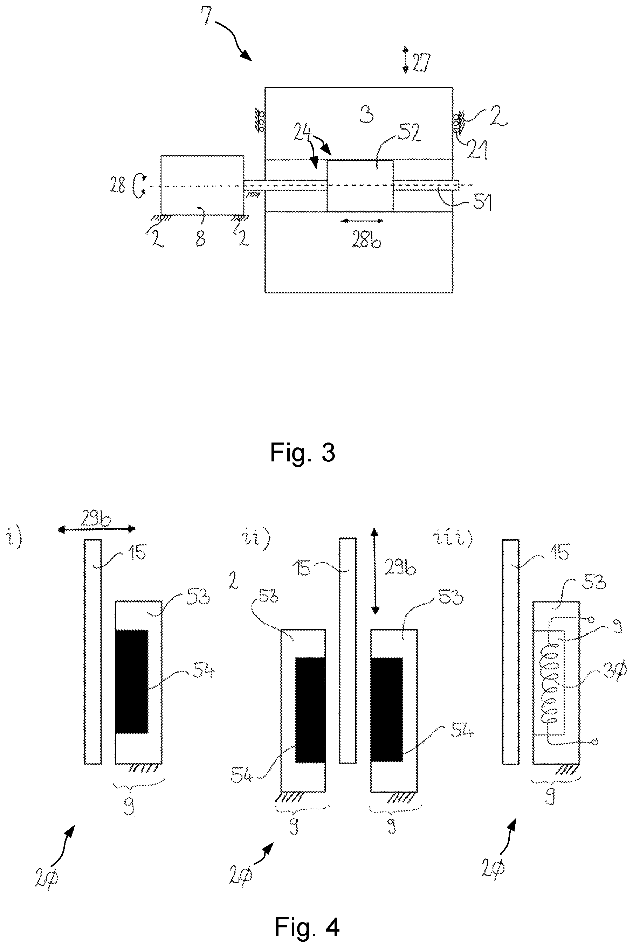

In a further possible embodiment shown in Figure 3, the adjustable stiffness element 7 is formed as a cantilever beam 51, a supporting point 52 of which can be changed by means of an electric motor 8 by changing the translational position 28b of the supporting point 52 by means of a drive system 24, which can be a ball screw 51 or any other transmission mechanism. The unidirectional motion of the moving table 3 relative to the stationary part 2 in the relative direction of motion 27 is still provided by guiding elements 21. Guiding elements 21 can be realized e.g. as a roller-track. In both embodiments according to Figure 2 and Figure 3 varying stiffness can be achieved by an actuator setting an angular position 28 of a shaft.

In the following, three possible embodiments are proposed for controlling the damping intensity of the adjustable damping element 20. Embodiment shown in Figure 4 i) a magnet 9 consisting a permanent magnet 54 and a steel cover 53 and an electrically conducting plate 15 are arranged that way that the gap between the magnet 9 and the plate 15 can be adjusted by the relative position in the direction 29b. The magnet 9 and the plate 15 are fixed to parts of the device 1 in a displaceable manner relative to each other, so the electrically conducting plate 15 moves in the magnetic field induced by the permanent magnet 54 resulting in eddy currents and energy dissipation therein. The change in the gap in direction 29b influences the intensity of the eddy currents in the plate 15, and results a variable intensity damping depending on the relative position of the magnet 9 and the plate 15 in direction 29b.

In another embodiment shown in Figure 4 ii) the adjustable damping element 20 comprises an electrically conducting plate 15 and a pair of magnets 9 consisting a permanent magnet 54 and a steel cover 53. The magnets 9 and the plate 15 are fixed to parts of the device 1 in a displaceable manner relative motion to each other, so the electrically conducting plate 15 moves in the magnetic field induced by the permanent magnets 54 resulting eddy currents and energy dissipation therein. The position of the plate 15 can be adjusted in the depicted direction 29b relative to the magnets 9, so the overlapping area between the magnets 9 and the plate 15 changes, resulting in the desired variable damping ratio.

In a third embodiment shown in Figure 4 iii the magnet 9 is an electromagnet having a steel cover 53 and a coil 30 with a controlled current flowing in the coil 30, next to which the electrically conducting plate 15 is arranged. The damping ratio of the adjustable damping element 20 can be changed by adjusting the electric current flowing through the 30 coil of the electromagnet. The change in electric current changes the intensity of the magnetic field, which changes the intensity of the eddy currents, i.e. the damping ratio of the adjustable damping element 20.

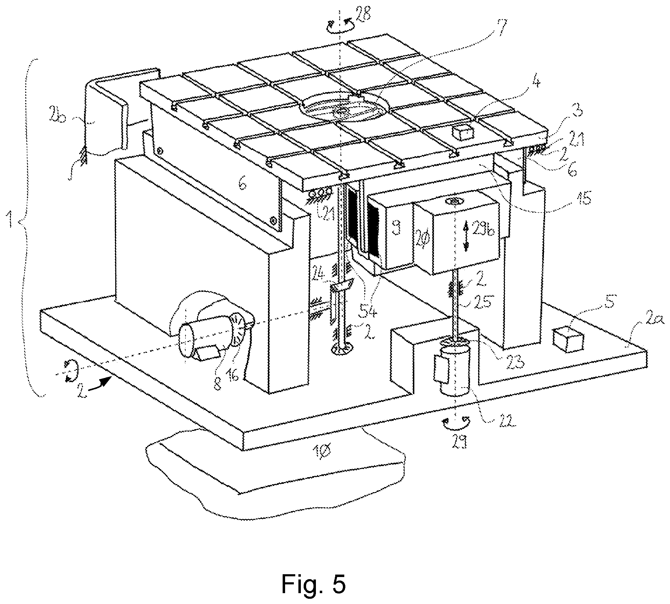

A possible embodiment of the tuneable clamping device 1 is shown in Figure 5. Said device 1 comprises a base 2a and an outer casing 2b, which together form a stationary part 2, and a moving table 3, and a tuneable connection including constant stiffness elastic elements 6, which in turn play the role of the guiding element 21, a rotatable, H-shaped, anisotropic stiffness adjustable stiffness element 7 and a damping element 20 comprising a pair of magnets 9 and an electrically conducting plate 15. The adjustable stiffness element 7 can be rotated by the electromotor 8 through the transmission 24, and the actual angular position 28 can be read from an encoder 16. The damping ratio of the damping element can be adjusted by an electric motor 22 such that the position of the magnets 9 relative to the plate 15 can be varied in direction 29b by a ball screw 25. The plate 15 is connected to the moving table 3, while the magnets 9 are connected to the stationary part 2, thus the relative motion of the moving table 3 causes the relative motion of the plate 15 relative to the magnets 9. This relative motion results in eddy currents with intensity proportional to the relative velocity and the overlapping area of the plate 15 and the magnets 9. An accelerometer 4 is attached to the moving table 3, while another accelerometer 5 is attached to the stationary part 2 in order to be able to measure the vibration accelerations as an input for the optimal stiffness and damping calculations.

A possible embodiment of the tuneable clamping device 1 has constant stiffness elastic element 6 with rectangular shape plate made from steel, having at least 0.12 mm transversal displacement measured in the middle of the top edge under a transversal unit force acting at the middle of the top edge, when it is clamped along its longest edge. The replaceable H-shaped adjustable stiffness element 7 has at least a ratio of eight between its minimum and maximum operational stiffness in order to have the range for proper operation and reaching at least 2000 N/mm in the minimum stiffness operational direction. This makes the tuneable clamping device 1 to operate in unloaded frequency range 100-500 Hz. In the adjustable damping element 20 corresponding to Figure 4 ii) multiple permanent magnets 9 are arranged along the electrically conducting plate 15 on both sides, generating perpendicular magnetic flux crossing the plate 15, whereas the neighboring magnets 9 and the magnets 9 on the opposite side of the plate 15 are arranged with alternating poles, resulting in alternating flux directions through the plate 15. The relative direction of motion 27 of the electrically conducting plate 15 relative to the magnets 9 is the same as the direction of the main vibration mode of the tuneable clamping device 1. The constant stiffness elastic element 6, the conducting plate 15 and the double row arrangement of magnets 9 are placed pared in parallel in symmetric arrangement to the axis of the rotation of the adjustable stiffness element 7 formed as a H-shaped spring.

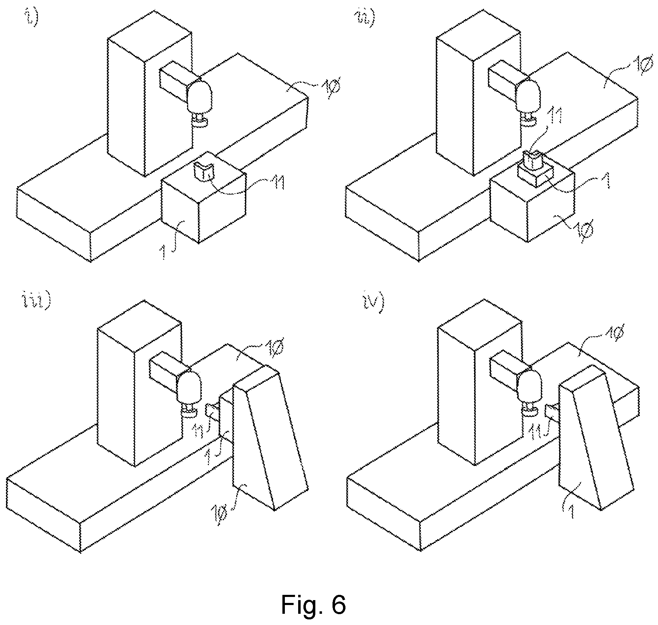

The tuneable clamping device 1 can be oriented in various directions relative to the main spindle of the machine tool 10. Figure 6 shows 4 different arrangements which are possible but not exclusive examples for the orientations. In Figure 6 i) the device 1 is a built-in part of the machine tool 10 with the relative motion of the moving table 3 in one of the directions of the horizontal plane. The workpiece 11 is attached to the device 1 with any method common in machine tools. In Figure 6 ii) the device 1 is not part of the machine tool 10, but it is attached to the machine tool table, whereas the relative motion of the moving table 3 is possible in one of the directions of the horizontal plane. In Figure 6 iii) and Figure 6 iv) the device 1 is a built-in part of the machine tool 10 or it is attached thereto, and the relative motion of the moving table 3 with respect to the stationary part 2 is possible in one of the directions in the vertical plane.

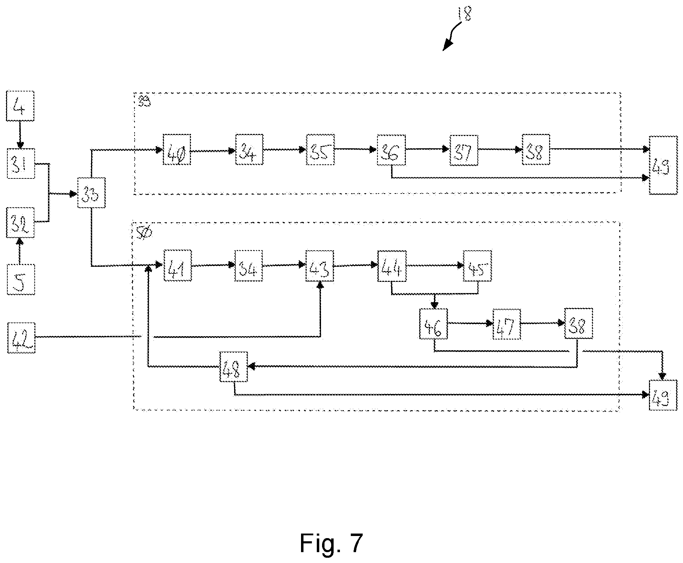

The tuneable clamping device 1 allows to determine optimal stiffness and damping parameters according to said optimal serial dynamic coupling or said coupling through machining process or any other preferred method. Figure 7 shows a possible embodiment for the control algorithm implemented by the control unit 18. It may be possible to implement any other preferred method in order to optimize the dynamics of the serial dynamic system in order to attenuate the vibration amplitude of the workpiece 11. The control unit 18 acquires a table acceleration signal 31 and a base acceleration signal 32 using the table accelerometer 4 and the base accelerometer 5. In this case, the signals 31, 32 are preprocessed in a pre-signal processing unit 33. Depending on the selected operation mode of the control unit 18, whether the machining process is under operation, the control unit 18 is capable of non-operational control 39 and operational control 50. In non-operational case the control unit 18 determines the dominant mode in the direction 26 of the workpiece 11 by using external excitation with e.g., a simple hammer. It applies filters for non-operational modes 40 and spectrum analysis 34. Afterwards, it can detect the dominant mode of the workpiece 11 with dominant mode detection unit 35. The range feasibility analysis 36 decides if the tuning is possible. If not, non-operational tuning 39 is not possible, if yes, the parameters are determined for reaching said optimal serial dynamic coupling by a non-operational tuning unit 37, while parameter adjustment are carried out in step 38. In the operational control case 50 operational filter is used before spectrum analysis 34. By removing stationary solution 43 with the known spindle speed signals 42, the dominant chatter frequency is determined in step 44 and their modulations are calculated in step 45. Decision is reached based on the tuning feasibility in step 46 and said optimal serial dynamic coupling or said coupling through machining process is achieved in step 47. The stiffness and damping are adjusted in step 38 according to step 47. The quality of tuning is determined in step 48, which can initiate a new iteration cycle or accept the tuning in step 49.

### Industrial applicability

The proposed tuneable clamping device 1 is applicable for machine tools 10 (Figure 6) wherein the part of the machine tool 10 is playing the role of their main workpiece table Figure 6 *i)* or workpiece column Figure 6 *iv),* or wherein separate device fixed on the main workpiece table Figure 6 *ii)* or workpiece column Figure 6 *iii*). In all configurations the tuneable clamping device 1 can eliminate the effect of an essential vibration mode of the clamped workpiece 11 in the direction 26. The tuneable clamping device 1 according to the invention can continuously follows by its variable tuning the variable nature of the dominant mode of the workpiece 11 with flexible part during machining operation. The proposed invention can significantly increase the material removal rate especially around flexible segments of the workpiece 11 clamped on.

## Claims

1. A tuneable clamping device (1) for suppressing vibrations of a clamped workpiece (11), comprising a stationary part (2) which is suitable to be fixed to a table of a machine tool (10) or formed as part of a table of a machine tool (10), and a moving table (3) connected to the stationary part (2) and configured to move along a relative direction of motion (27), **characterized in that** the stationary part (2) and the moving table (3) are connected by means of a tuneable connection (19) having adjustable stiffness element (7) and adjustable damping element (20), wherein accelerometers (5, 4) are connected to the stationary part (2) and the moving table (3), respectively, and wherein the moving table (3) is configured for clamping the workpiece (11) thereon.

2. The tuneable clamping device (1) of claim 1 **characterized in that** the relative direction of motion (27) between the stationary part (2) and the moving table (3) is unidirectional which is provided by guiding elements (21).

3. The tuneable clamping device (1) of claim 2, **characterized in that** the guiding element (21) is a roller-track.

4. The tuneable clamping device (1) of claim 1 **characterized in that** the tuneable connection (19) is combined with constant stiffness elastic elements (6).

5. The tuneable clamping device (1) of claim 4 **characterized in that** the constant stiffness elastic element (6) is a plate made from steel.

6. The tuneable clamping device (1) of claim 2 **characterized in that** the relative direction of motion (27) between the stationary part (2) and the moving table (3) is determined by the constant stiffness elastic elements (6) and the constraining elements (21).

7. The tuneable clamping device (1) of claim 1 **characterized in that** the tuneable connection (19) comprises an adjustable stiffness element (7) formed as an "H" shaped spring with walls (7.1, 7.2) of different thickness, and a rotating mechanism (24).

8. The tuneable clamping device (1) of claim 1 **characterized in that** the tuneable connection (19) comprises an adjustable stiffness element (7) formed as a cantilever beam (51) with a ball screw of adjustable coupling point (52), and a rotating mechanism (24).

9. The tuneable clamping device (1) of claim 1 **characterized in that** the adjustable damping element (20) comprises a pair of magnets (9) and an electrically conducting plate (15) fixed to the stationary (2) and the moving (3) parts of the tuneable clamping device (1), respectively, with a variable overlapping area between them by adjustable relative position in a direction (29b).

10. The tuneable clamping device (1) of claim 1 **characterized in that** the adjustable damping element (20) comprises a magnet (9) and an electrically conducting plate (15) fixed to the stationary (2) and the moving (3) parts of the tuneable clamping device (1), respectively, with a variable gap between them by an adjustable relative position in a direction (29b).

11. The tuneable clamping device (1) of claims 9 and 10, **characterized in that** the magnet (9) is an electromagnet having a steel casing (53) and a coil (30) adapted to flow variable electric current therethrough.

12. The tuneable clamping device (1) of claim 1 **characterized in that** the adjustable stiffness element (7) of the tuneable connection (19) is being replaceable according to the required stiffness parameters for operation.

13. The tuneable clamping device (1) of claim 1 **characterized in that** the accelerometers (4, 5), the adjustable stiffness element (7) and the adjustable damping element (20) of the tuneable connection (19) are connected to a control unit (18).

14. The tuneable clamping device (1) of claim 13, **characterized in that** an output signal of the control unit (18) is configured to be indicative to the required stiffness and damping parameters determined from regenerative chatter frequencies and optionally from their modulations.

## Patentansprüche

1. Abstimmbare Spannvorrichtung (1) zum Unterdrücken von Schwingungen eines eingespannten Werkstücks (11), umfassend einen stationären Teil (2), der dazu geeignet ist, an einem Tisch einer Werkzeugmaschine (10) befestigt zu werden oder als Teil eines Tisches einer Werkzeugmaschine (10) ausgebildet zu sein, und einen beweglichen Tisch (3), der mit dem stationären Teil (2) verbunden und dazu eingerichtet ist, sich entlang einer relativen Bewegungsrichtung (27) zu bewegen, **dadurch gekennzeichnet, dass** der stationäre Teil (2) und der bewegliche Tisch (3) mittels einer abstimmbaren Verbindung (19) miteinander verbunden sind, die ein Element mit einstellbarer Steifigkeit (7) und ein Element mit einstellbarer Dämpfung (20) aufweist, wobei Beschleunigungssensoren (5, 4) jeweils mit dem stationären Teil (2) bzw. dem beweglichen Tisch (3) verbunden sind und wobei der bewegliche Tisch (3) zum Einspannen des Werkstücks (11) darauf eingerichtet ist.

2. Abstimmbare Spannvorrichtung (1) nach Anspruch 1, **dadurch gekennzeichnet, dass** die relative Bewegungsrichtung (27) zwischen dem stationären Teil (2) und dem beweglichen Tisch (3) eindirektional ist und durch Führungselemente (21) bereitgestellt wird.

3. Abstimmbare Spannvorrichtung (1) nach Anspruch 2, **dadurch gekennzeichnet, dass** das Führungselement (21) eine Rollenführung ist.

4. Abstimmbare Spannvorrichtung (1) nach Anspruch 1, **dadurch gekennzeichnet, dass** die abstimmbare Verbindung (19) mit elastischen Elementen mit konstanter Steifigkeit (6) kombiniert ist.

5. Abstimmbare Spannvorrichtung (1) nach Anspruch 4, **dadurch gekennzeichnet, dass** das elastische Element mit konstanter Steifigkeit (6) eine aus Stahl gefertigte Platte ist.

6. Abstimmbare Spannvorrichtung (1) nach Anspruch 2, **dadurch gekennzeichnet, dass** die relative Bewegungsrichtung (27) zwischen dem stationären Teil (2) und dem beweglichen Tisch (3) durch die elastischen Elemente mit konstanter Steifigkeit (6) und die Führungselemente (21) bestimmt ist.

7. Abstimmbare Spannvorrichtung (1) nach Anspruch 1, **dadurch gekennzeichnet, dass** die abstimmbare Verbindung (19) ein Element mit einstellbarer Steifigkeit (7) umfasst, das als "H"-förmige Feder mit Wänden (7.1, 7.2) unterschiedlicher Dicke ausgebildet ist, sowie einen Drehmechanismus (24).

8. Abstimmbare Spannvorrichtung (1) nach Anspruch 1, **dadurch gekennzeichnet, dass** die abstimmbare Verbindung (19) ein Element mit einstellbarer Steifigkeit (7) umfasst, das als Kragträger (51) mit einem Kugelgewindetrieb eines einstellbaren Kopplungspunkts (52) ausgebildet ist, sowie einen Drehmechanismus (24).

9. Abstimmbare Spannvorrichtung (1) nach Anspruch 1, **dadurch gekennzeichnet, dass** das Element mit einstellbarer Dämpfung (20) ein Paar von Magneten (9) und eine elektrisch leitfähige Platte (15) umfasst, die jeweils an dem stationären Teil (2) bzw. dem beweglichen Teil (3) der abstimmbaren Spannvorrichtung (1) befestigt sind, wobei zwischen ihnen durch eine einstellbare relative Position in einer Richtung (29b) ein veränderlicher Überlappungsbereich vorgesehen ist.

10. Abstimmbare Spannvorrichtung (1) nach Anspruch 1, **dadurch gekennzeichnet, dass** das Element mit einstellbarer Dämpfung (20) einen Magneten (9) und eine elektrisch leitfähige Platte (15) umfasst, die jeweils an dem stationären Teil (2) bzw. dem beweglichen Teil (3) der abstimmbaren Spannvorrichtung (1) befestigt sind, wobei zwischen ihnen durch eine einstellbare relative Position in einer Richtung (29b) ein veränderlicher Spalt vorgesehen ist.

11. Abstimmbare Spannvorrichtung (1) nach den Ansprüchen 9 und 10, **dadurch gekennzeichnet, dass** der Magnet (9) ein Elektromagnet mit einem Stahlgehäuse (53) und einer Spule (30) ist, durch die ein variabler elektrischer Strom hindurchleitbar ist.

12. Abstimmbare Spannvorrichtung (1) nach Anspruch 1, **dadurch gekennzeichnet, dass** das Element mit einstellbarer Steifigkeit (7) der abstimmbaren Verbindung (19) entsprechend den für den Betrieb erforderlichen Steifigkeitsparametern austauschbar ist.

13. Abstimmbare Spannvorrichtung (1) nach Anspruch 1, **dadurch gekennzeichnet, dass** die Beschleunigungssensoren (4, 5), das Element mit einstellbarer Steifigkeit (7) und das Element mit einstellbarer Dämpfung (20) der abstimmbaren Verbindung (19) mit einer Steuereinheit (18) verbunden sind.

14. Abstimmbare Spannvorrichtung (1) nach Anspruch 13, **dadurch gekennzeichnet, dass** ein Ausgangssignal der Steuereinheit (18) für die erforderlichen Steifigkeits- und Dämpfungsparameter kennzeichnend ist, die aus regenerativen Ratterfrequenzen und gegebenenfalls aus deren Modulationen bestimmt werden.

## Revendications

1. Dispositif de serrage accordable (1) destiné à supprimer les vibrations d'une pièce à usiner serrée (11), comprenant une partie stationnaire (2) qui est apte à être fixée à une table d'une machine-outil (10) ou qui est formée comme partie d'une table d'une machine-outil (10), et une table mobile (3) reliée à la partie stationnaire (2) et configurée pour se déplacer le long d'une direction relative de déplacement (27), **caractérisé en ce que** la partie stationnaire (2) et la table mobile (3) sont reliées au moyen d'une liaison accordable (19) présentant un élément à rigidité réglable (7) et un élément à amortissement réglable (20), dans lequel des accéléromètres (5, 4) sont reliés respectivement à la partie stationnaire (2) et à la table mobile (3), et dans lequel la table mobile (3) est configurée pour serrer la pièce à usiner (11) sur celle-ci.

2. Dispositif de serrage accordable (1) selon la revendication 1, **caractérisé en ce que** la direction relative de déplacement (27) entre la partie stationnaire (2) et la table mobile (3) est unidirectionnelle et est assurée par des éléments de guidage (21).

3. Dispositif de serrage accordable (1) selon la revendication 2, **caractérisé en ce que** l'élément de guidage (21) est un chemin de roulement à rouleaux.

4. Dispositif de serrage accordable (1) selon la revendication 1, **caractérisé en ce que** la liaison accordable (19) est combinée avec des éléments élastiques à rigidité constante (6).

5. Dispositif de serrage accordable (1) selon la revendication 4, **caractérisé en ce que** l'élément élastique à rigidité constante (6) est une plaque réalisée en acier.

6. Dispositif de serrage accordable (1) selon la revendication 2, **caractérisé en ce que** la direction relative de déplacement (27) entre la partie stationnaire (2) et la table mobile (3) est déterminée par les éléments élastiques à rigidité constante (6) et les éléments de guidage (21).

7. Dispositif de serrage accordable (1) selon la revendication 1, **caractérisé en ce que** la liaison accordable (19) comprend un élément à rigidité réglable (7) formé sous la forme d'un ressort en forme de « H » comportant des parois (7.1, 7.2) d'épaisseurs différentes, et un mécanisme de rotation (24).

8. Dispositif de serrage accordable (1) selon la revendication 1, **caractérisé en ce que** la liaison accordable (19) comprend un élément à rigidité réglable (7) formé sous la forme d'une poutre en porte-à-faux (51) avec une vis à billes d'un point de couplage réglable (52), et un mécanisme de rotation (24).

9. Dispositif de serrage accordable (1) selon la revendication 1, **caractérisé en ce que** l'élément à amortissement réglable (20) comprend une paire d'aimants (9) et une plaque électriquement conductrice (15) fixés respectivement à la partie stationnaire (2) et à la partie mobile (3) du dispositif de serrage accordable (1), avec une zone de recouvrement variable entre eux par une position relative réglable dans une direction (29b).

10. Dispositif de serrage accordable (1) selon la revendication 1, **caractérisé en ce que** l'élément à amortissement réglable (20) comprend un aimant (9) et une plaque électriquement conductrice (15) fixés respectivement à la partie stationnaire (2) et à la partie mobile (3) du dispositif de serrage accordable (1), avec un entrefer variable entre eux par une position relative réglable dans une direction (29b).

11. Dispositif de serrage accordable (1) selon les revendications 9 et 10, **caractérisé en ce que** l'aimant (9) est un électroaimant présentant une enveloppe en acier (53) et une bobine (30) adaptée pour laisser circuler à travers celle-ci un courant électrique variable.

12. Dispositif de serrage accordable (1) selon la revendication 1, **caractérisé en ce que** l'élément à rigidité réglable (7) de la liaison accordable (19) est remplaçable en fonction des paramètres de rigidité requis pour le fonctionnement.

13. Dispositif de serrage accordable (1) selon la revendication 1, **caractérisé en ce que** les accéléromètres (4, 5), l'élément à rigidité réglable (7) et l'élément à amortissement réglable (20) de la liaison accordable (19) sont reliés à une unité de commande (18).

14. Dispositif de serrage accordable (1) selon la revendication 13, **caractérisé en ce que** un signal de sortie de l'unité de commande (18) est configuré pour indiquer les paramètres de rigidité et d'amortissement requis déterminés à partir de fréquences de broutement régénératif et, facultativement, à partir de leurs modulations.
